# EUROPEAN PATENT SPECIFICATION

(11) **EP 1 298 384 B1**
(45) Date of publication and mention of the grant of the patent: **03.03.2004**
(21) Application number: 02380202.8
(22) Date of filing: 26.09.2002
(51) Int. Cl.: F21S 8/12, B60Q 1/00, F21V 8/00

(54) **Automobile optical group module**
Bauteil für Kfz-Beleuchtungseinheit
Module pour bloc optique d'automobile

(30) Priority: 27.09.2001 ES 200102382; 02.10.2001 ES 200102418
(43) Date of publication of application: 02.04.2003
(73) Proprietor: Seat, S.A., 08040 Barcelona (ES)
(72) Inventor: Sola Gonfaus, Andreu, 08027 Barcelona (ES); Mas Vallespin, Hector, 08014 Barcelona (ES); Elvira Avila, Carlos, 08330 Premia de Mar (Barcelona) (ES)
(74) Representative: Davila Baz, Angel

(56) References cited:
- DE-A- 19 838 224
- ES-U- 1 047 668
- US-A- 4 631 642

## Description

The present invention relates to a module for automobile optical groups, particularly a front module, consisting of a casing bearing the lamp and the various optical elements, such as a reflector or parabola, connection mechanisms, diaphragms, etc., mounted so that it can swivel about a horizontal axis on a platform which can also be turned about a vertical axis.

A module of this type according to the preamble of claim 1, is described in Spanish Utility Model application number 200002840 by the applicants. This module consists of a casing including the various components and connection mechanisms. The casing is mounted so that it can swivel about a horizontal axis on a front cover that is attached to a lower cylindrical platform that can swivel about its vertical axis. Between the platform and the casing is mounted a gear-based mechanism that allows turning the casing about a horizontal axis. The rear cover bears a set of LEDs that are used as optical indicators.

The above-described arrangement can result in certain complications in the construction of the module, particularly due to the need to provide an electrical power supply to the set of LEDs set on the front cover.

The object of the present invention is a module for optical groups meant to be mounted inside a headlamp, forming a compact unit that includes the illumination and signalling means as well as all required elements and mechanisms, thereby simplifying the assembly and removal of the unit each time this is necessary and eliminating external elements that could interfere in the assembly of other components of the vehicle.

The module of the invention consists of an assembly comprised of a casing in which are mounted the reflector or parabola, the lamp, the connection mechanisms, the diaphragm, etc. This casing is mounted free to swivel about a horizontal axis on a platform which in turn can swivel about a vertical axis. In this way, the casing and the illumination elements housed in it can be turned about a vertical and a horizontal axis.

In order to enable it to swivel about a horizontal axis the casing can be mounted as described in the Utility Model 200002840, or by any other system.

In accordance with the present invention, a set of light guides is arranged around the casing of the optical module, running in a longitudinal direction with respect to said casing and mounted between an anterior annular cover through which enter the light guides and a posterior annular cover through which said guides are connected to light sources.

The anterior and posterior annular covers can be mounted directly on the platform that can swivel about a vertical axis. The anterior annular cover is placed in front of the casing, around the output of the light beam, so that it docs not interfere with said beam. On its part, the posterior annular cover is placed behind the casing.

The light sources may consist of LEDs, while the guides can consist of optic fibres.

The set of light guides can be connected through the posterior annular cover to two different light sources, with the guides arriving from said light sources being anteriorly connected to two different output groups. One of these groups can correspond to the parking lights while the other can be for example correspond to the blinkers.

The two different output groups of the anterior annular cover can be arranged in concentric annular distributions.

The light guides can receive the light from LEDs, as mentioned above, or from lamps, which would be placed on the posterior support. The light could also arrive from a bundle of fibres that are distributed when reaching the posterior support.

The anterior and posterior annular covers can also be attached to the module casing, so that the casing and the anterior and posterior annular covers form an assembly that is mounted on the lower platform, which can swivel on a support including a lower arched segment, which follows a circular arc path and runs under the casing parallel to the axis of said casing and that is provided with a toothing that engages a gear wheel of a drive shaft.

Preferably, the lower circular arc-shaped segment is crossed perpendicularly by three rollers mounted on the lower cylindrical platform, with two of these rollers being toothed and placed on the toothed side of the aforementioned circular arc shaped lower segment, while the third roller is smooth and rests on the aforementioned lower segment on its side without teeth.

With this construction, the lower arched segment that constitutes the support bearing the casing is mounted between the three rollers, which are placed around it on different sides. One of the toothed rollers determines the drive shaft.

The above-described support also has a lens placed in front of the casing, through which passes the light beam. The support can consist of two arched segments, a lower one and an upper one that respectively run above and below the casing in a longitudinal sense. Between these two segments is mounted said lens.

According to this embodiment the system for mounting the casing on the lower platform is simplified, as it is achieved by the three rollers that perpendicularly cross the lower arc that determines the support, with one of these arcs further acting as a drive shaft for orientation about a horizontal axis.

With the described arrangement the module of the invention includes the lamp that provides the normal illumination of the vehicle, which is mounted inside the module casing, and also includes the optical indicators defined by the outputs of the light guides through the anterior annular cover, which can act as parking lights, blinkers, etc. In addition, at least the lamp can swivel about a vertical axis and a horizontal axis, with the ensuing advantages in positioning and pairing, and allowing combining one or more modules in a single optical group as well as the interchangeability between the left and right side groups.

Furthermore, the described group provides a novel appearance with a new look, as it has its own design inside the optical group. Also, the module of the invention allows the entire mechanism of the optical group to be housed inside it, thereby providing an independent volume inside the group or headlamp.

The novel aspects of the module of the invention compared to conventional headlamps are: a set of optical guides that transmit light surrounding the casing with the optical components; its looks, as it has an inner design fully independent of the headlamp and that can include in a single assembly all the functions, showing the components of the optical group; the design possibility for the optical group, as the modules are independent; and the possibility of using the same module for both the right side and left side optical groups.

The optical module casing includes in it the lamp that provides the various illumination functions, the reflector or parabola and the other optical components, such as the diaphragm. On its rear, the casing shall be provided with the power supply cable connection.

In order to aid a better understanding of the characteristics and advantages of the module of the invention, a more detailed description of it is provided made with the aid of the accompanying drawings of a non-limiting example of an embodiment.

In the drawings:

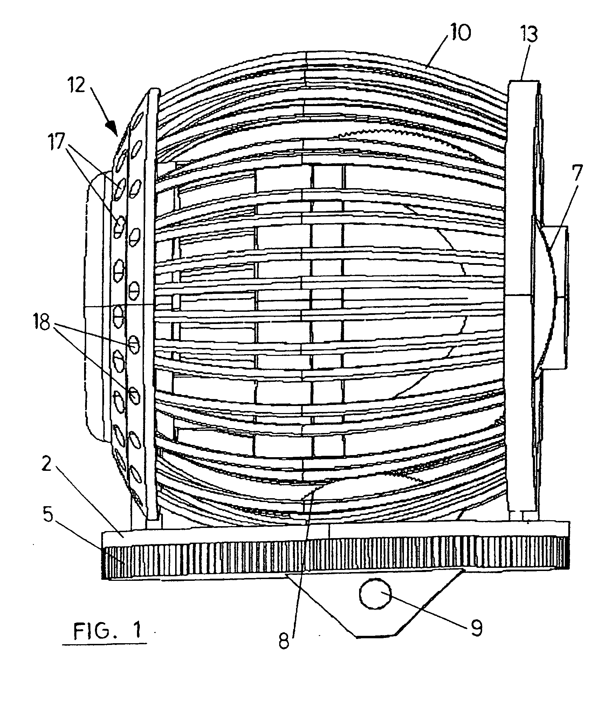

Figure 1 shows a side elevation view of a module for automobile optical groups constructed according to the invention.
Figure 2 is a front elevation view of the module of figure 1.
Figure 3 is an exploded perspective view of the module of figures 1 and 2.
Figure 4 shows a perspective view of an alternative embodiment for the module of the invention.
Figure 5 is an exploded perspective view of the module of figure 4.

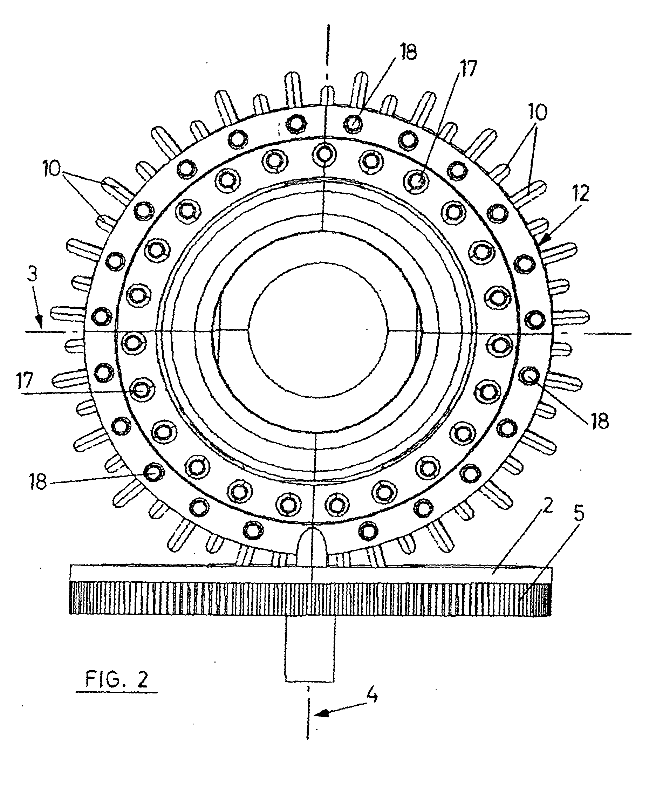

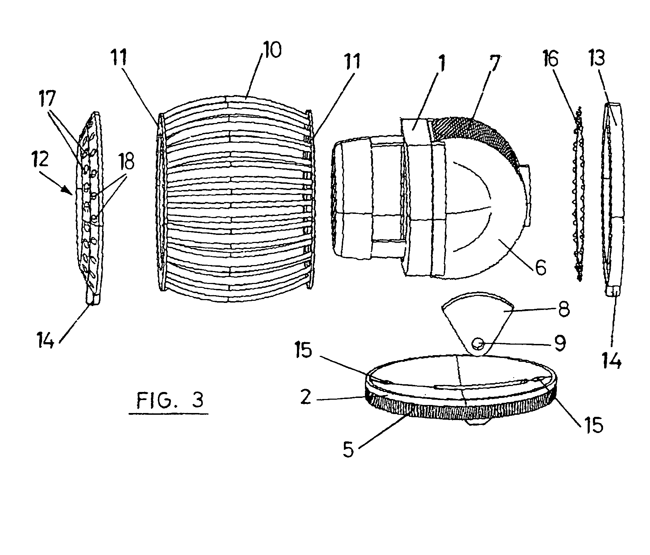

As can be best appreciated in figure 3, the module of the invention consists of a casing 1 mounted on the platform 2, free to swivel about a horizontal axis 3, figure 2, that can be embodied as described in Utility Model 200002840 or in any other way.

The platform 2 has a cylindrical configuration and a small height, adopting a disc-like shape with a concave upper surface, and can turn about its vertical axis 4. This platform is provided on its perimeter with an axial toothing 5 with which it will engage with a drive gear, not shown in the drawings.

On its part, the casing 1 ends at its rear as a semi-cylindrical surface 6 with the horizontal axis of rotation 3 of the casing. This semi-cylindrical surface is provided with an axial toothing 7 which engages a toothed sector 8 mounted on the platform 2 so that it can swivel about an axis 9. The toothed sector 8 can cross the platform 2 for connection with a drive element.

With the above described construction the casing 1 is free to turn about the horizontal axis 3 by actuation of the sector 8, and about the axis 4 by actuation of the platform 2.

Around the casing 1 is provided a set of light guides, for example consisting of optic fibres 10, which can be mounted for example between end rings 11 to jointly define a cylindrical cage with a convex generating curve disposed around the casing 1.

This cage or set of light guides is mounted between an anterior annular cover, labelled in general as 12, and a posterior annular cover labelled 13. The two annular covers are mounted on the platform 2, such as by attachment tongues 14 inserted through orifices 15 of the platform 2.

On the posterior annular cover 13 is mounted a set of LEDs 16, each of which constitutes a light source for one of the guides or optic fibres 10. On their opposite end said fibres exit through openings that in the example shown in the drawings occupy the two concentric annular distributions 17 and 18, each of which is mounted in a ring, which together for the anterior annular cover 12. At each of these openings arrives a different group of guides or fibres 10, which will also be fed by different light sources, such as by two groups of LEDs. The set of openings 18 can for example be used as blinkers, while the set of openings 17 can be used for the parking lights.

The anterior annular cover 12 is disposed around the light output of the casing 1, so that it does not interfere with the outgoing light beam.

The anterior and posterior annular covers 12 and 13 form a single body with the set of guides or optic fibres 10, which transmit the light induced by the array of LEDs 16.

As described above, the set of LEDs 16 can be replaced by lamps or a bundle of fibres.

With the above construction the light guides or optic fibres 10 corresponding to the outputs 17 and 18 can run in alternating positions.

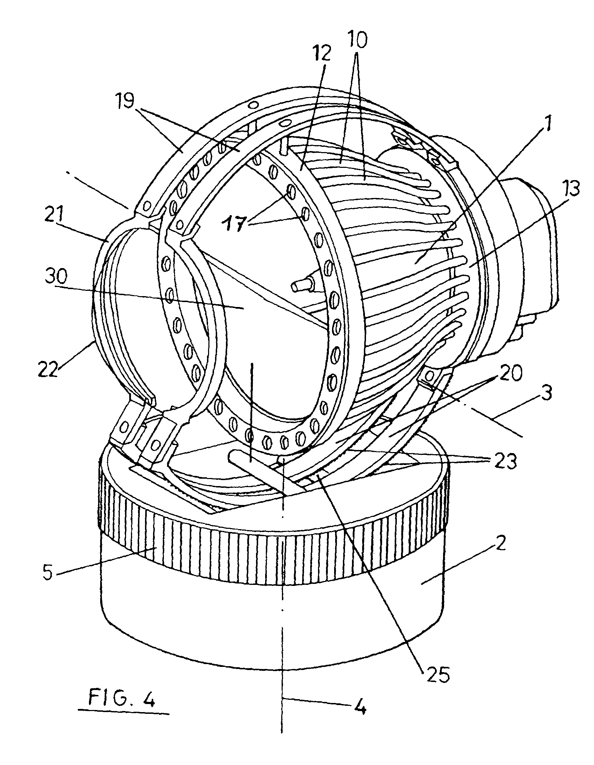

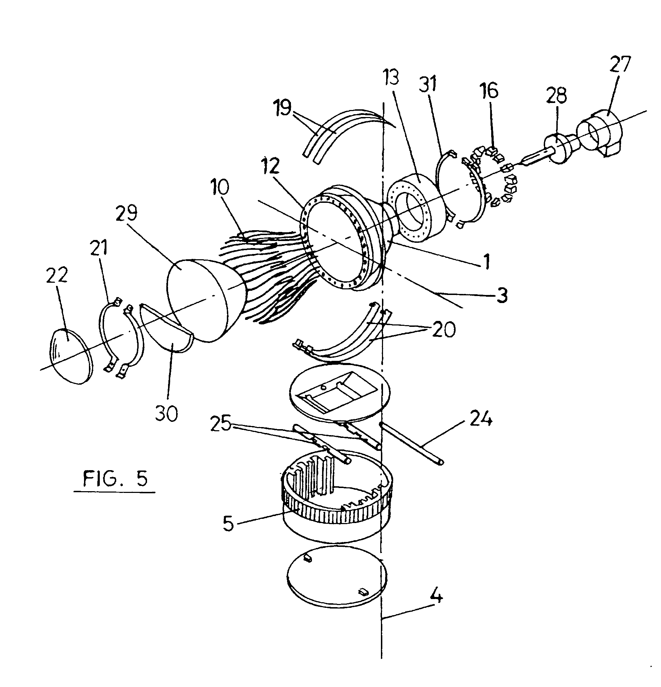

In the embodiment shown in figures 4 and 5, the casing 1 is mounted on the platform 2 by means of supports including upper arched segments 19 and lower arched segments 20, in the form of a circular arc, that run longitudinally with respect to the casing 1. These arched segments are joined on their rear end to the casing 1, while on their front end they are joined to a front ring 21 that bears the lens 22 through which the light beam will exit.

The lower arched segments 20 of the support are provided with an outer transverse toothing 23 and are transversally crossed by three rollers, an inner smooth roller 24 and two outer toothed rollers 25. These three rollers are mounted on the platform 2, with at least one of the toothed rollers constituting a drive gear for the toothed sectors defined by the lower arched segments 20.

With the above construction, the casing 1 is mounted on the platform 2 through two rollers 24 and 25, which also act as drive elements for swivelling about the horizontal axis 3.

Placed about the casing 1 is the bundle of optic fibres 10, mounted between the anterior annular cover 12 that closes the casing 1 and a posterior ring 13 that can include an array of LEDs 16, whose light is transmitted through the optic fibres 10 to be visible through the orifices 17 of the annular cover 12. The array of LEDs can be replaced by a set of lamps or a bundle of fibres. The cover 12 can be attached on casing 1 or positioned on it through the anterior ring 21.

When the platform 2 is actuated through its peripheral toothing 5 the casing 1 is made to turn about the vertical axis 4. Actuation of the toothed rollers 25 effects the swivelling motion of the casing 1 about the horizontal axis 3. These toothed rollers can be replaced by toothed segments.

As shown in figure 5, the lower platform can consist of a disc that is mounted on a ring provided with the peripheral toothing 5. The disc is provided with an upper recess through which pass the rollers 24 and 25.

As shown in figure 5, the casing 1 shall include the connection means 27, the lamp 28, parabola 29, filter 30, etc. In addition the casing shall bear on its rear a ring 31 similar to the anterior ring 21, between which pass the arches 19 and 20 that form the casing support.

With the described construction a module is obtained that supplies the light for the headlamp by means of the lamp or lamps housed in the casing 1, as well as the concentric indication elements provided by the guides or optic fibres 10.

The module of the invention provides a novel appearance with a new look, as it has its own design inside the optical group. In addition, the module of the invention allows the entire mechanism of the optical group to be housed inside it, so that an independent volume is provided inside the optical group or headlamp.

The novel aspects provided by module of the invention compared to conventional headlamps are: a) its looks, as its interior design is fully independent of the headlamp, with the components of the optical group being visible: b) the possibility of design of the optical group, as the modules are independent; c) the possibility of a vertical and horizontal swivelling motion; and d) the possibility of using the same modules and both optical groups on the left and right side.

## Claims

1. Module for optical groups of automobiles, consisting of a casing (1) bearing the various optical components, such as the reflector or parabola (29), the lamp (28), connection mechanisms (27) and a diaphragm, which casing is mounted so that it can swivel about a horizontal axis (3) on a platform (2) that in turn can swivel about a vertical axis (4), **characterised in that** around said casing is disposed a set of light guides (10) that run in a longitudinal sense with respect to said casing and that are mounted between an anterior annular cover (12), through which exit the light guides, and a posterior annular cover (13), through which said guides are connected to light sources, with the anterior annular cover placed in front of the casing (1) around the outlet of its light beam, while the posterior annular cover is placed behind said casing.

2. Module according to claim 1, **characterised in that** the anterior (12) and posterior (13) annular covers are mounted directly on the revolving platform (2).

3. Module according to claim 1, **characterised in that** the set of light guides (10) is connected through the posterior annular cover (13) to two different light sources, with the guides that arrive from said light sources exiting on the front through different output groups (17, 18).

4. Module according to claim 3, **characterised in that** the two different output groups of the anterior annular cover are disposed in concentric annular distributions.

5. Module according to claim 1, **characterised in that** the light sources consist of LEDs and the light guides consist of optic fibres.

6. Module according to claim 4, **characterised in that** the optic fibres (10) are mounted between end rings (11) that are attached to the anterior (12) and posterior (13) annular covers to define a cylindrical cage with a convex generating curve.

7. Module according to claim 1, **characterised in that** the anterior (12) and posterior (13) annular covers and the casing (1) bearing the optical components form an assembly that is mounted on the swivelling platform (2) through a support that includes at least one lower arched segment (20), with a circular arc shape, that runs under said casing (1) in a direction parallel to its axis, and is provided with a toothing (23) that engages a gear wheel of a drive shaft (25) mounted on said platform.

8. Module according to claim 7, **characterised in that** the lower segment (20) with a circular arc shape of the support is perpendicularly crossed by three rollers mounted on the aforementioned platform, two of them (25) being toothed and disposed on the toothed side (23) of said lower segment, engaging with it, and the third roller (24) having a smooth surface that rests on said lower segment on the side without toothing.

9. Module according to claim 7, **characterised in that** the support includes two arched segments, a lower one (20) and an upper one (19) that respectively run above and below the casing (1) in a longitudinal sense.

10. Module according to claim 7, **characterised in that** the annular cover for rear illumination (13) includes an annular array of LEDs (16) that is mounted on the rear of the casing (1), from which array runs the set of optic fibres (10) that reaches the anterior annular cover (12), which is provided with orifices through which the end of the optic fibres are visible.

## Patentansprüche

1. Modul für optische Gruppen von Kraftfahrzeugen, bestehend aus einem Gehäuse (1), das verschiedene optische Komponenten trägt, wie den Reflektor oder Parabolspiegel (29), die Lampe (28), Anschlussmechanismen (27) und eine Blende, wobei das Gehäuse so montiert ist, dass es um eine horizontale Achse (3) auf einer Plattform (2) schwenken kann, die ihrerseits um eine vertikale Achse (4) schwenken kann, **dadurch gekennzeichnet, dass** um das Gehäuse herum ein Satz von Lichtleitern (10) angeordnet ist, die in Längsrichtung bezüglich des Gehäuses verlaufen und zwischen einer vorderen Ringabdeckung (12), durch die die Lichtleiter austreten, und einer hinteren Ringabdeckung (13) angeordnet sind, durch die die Leiter hindurch an Lichtquellen angeschlossen sind, wobei die vordere Ringabdeckung vor dem Gehäuse (1) um den Austritt seines Lichtstrahls herum und die hintere Ringabdeckung hinter dem Gehäuse angeordnet ist.

2. Modul nach Anspruch 1, **dadurch gekennzeichnet, dass** die vordere Ringabdeckung (12) und die hintere Ringabdeckung (13) direkt an der schwenkbaren Plattform (2) angeordnet sind.

3. Modul nach Anspruch 1, **dadurch gekennzeichnet, dass** der Satz von Lichtleitern (10) durch die hintere Ringabdeckung (13) hindurch an zwei unterschiedliche Lichtquellen angeschlossen sind, wobei die Leiter, die von den Lichtquellen ausgehen, vorne durch unterschiedliche Austrittsgruppen (17, 18) austreten.

4. Modul nach Anspruch 3, **dadurch gekennzeichnet, dass** die beiden unterschiedlichen Austrittsgruppen der vorderen Ringabdeckung in konzentrischen Ringverteilungen angeordnet sind.

5. Modul nach Anspruch 1, **dadurch gekennzeichnet, dass** die Lichtquellen aus Leuchtdioden und die Lichtleiter aus Glasfasern bestehen.

6. Modul nach Anspruch 4, **dadurch gekennzeichnet, dass** die Glasfasern (10) zwischen Stirnringen (11) angeordnet sind, die an der vorderen Ringabdeckung (12) und der hinteren Ringabdeckung (13) befestigt sind, wodurch ein zylindrischer Käfig mit einer konvexen Mantellinie erzeugt wird.

7. Modul nach Anspruch 1, **dadurch gekennzeichnet, dass** die vordere Ringabdeckung (12) und die hintere Ringabdeckung (13) und dass die optische Bauteile tragenden Gehäuse (1) eine Anordnung bilden, die auf der schwenkbaren Plattform (2) durch einen Träger angebracht ist, der wenigstens ein unteres Bogensegment (20) mit Kreisbogenform hat, das unter dem Gehäuse (1) in einer Richtung parallel zu seiner Achse verläuft, und mit einer Zahnung (23) versehen ist, die mit einem Zahnrad einer an der Plattform angebrachten Antriebswelle (25) kämmt.

8. Modul nach Anspruch 7, **dadurch gekennzeichnet, dass** das untere Segment (20) mit der Kreisbogenform des Trägers senkrecht von drei an der erwähnten Plattform angebrachten Walzen gekreuzt wird, von denen zwei (25) gezahnt und auf der Zahnseite (23) des unteren Segments in Eingriff damit angeordnet sind, während die dritte Walze (24) eine glatte Oberfläche hat, die auf dem unteren Segment an der Seite ohne Zahnung anliegt.

9. Modul nach Anspruch 7, **dadurch gekennzeichnet, dass** der Träger zwei Bogensegmente hat, nämlich ein unteres (20) und ein oberes (19), die jeweils über und unter dem Gehäuse (1) in Längsrichtung laufen.

10. Modul nach Anspruch 7, **dadurch gekennzeichnet, dass** die Ringabdeckung für eine hintere Beleuchtung (13) eine Ringanordnung von Leuchtdioden (16) aufweist, die auf der Rückseite des Gehäuses (1) angebracht ist, wobei von der Anordnung aus der Satz von Glasfasern (10) ausgeht, der die vordere Ringabdeckung (12) erreicht, die mit Öffnungen versehen ist, durch die das Ende der Glasfasern sichtbar wird.

## Revendications

1. Module pour groupes optiques d'automobiles, composé d'un boîtier (1) supportant les différents composants optiques, comme le réflecteur ou la parabole (29), la lampe (28), des mécanismes de raccordement (27) et un diaphragme, lequel boîtier est monté de telle sorte qu'il peut pivoter autour d'un axe horizontal (3) sur une plateforme (2) qui peut à son tour pivoter autour d'un axe vertical (4), **caractérisé en ce qu'**un ensemble de guides de lumière (10) est disposé autour dudit boîtier qui s'étendent dans un sens longitudinal par rapport audit boîtier et qui sont montés entre un couvercle annulaire antérieur (12), à travers lequel sortent les guides de lumière, et un couvercle annulaire postérieur (13), à travers lequel lesdits guides sont reliés à des sources lumineuses, le couvercle annulaire antérieur étant positionné en face du boîtier (1) autour de l'orifice de son faisceau lumineux, tandis que le couvercle annulaire postérieur est positionné derrière ledit boîtier.

2. Module selon la revendication 1, **caractérisé en ce que** les couvercles annulaires antérieur (12) et postérieur (13) sont directement montés sur la plateforme de rotation (2).

3. Module selon la revendication 1, **caractérisé en ce que** l'ensemble de guides de lumière (10) est relié par l'intermédiaire du couvercle annulaire postérieur (13) à deux sources lumineuses différentes, avec les guides qui arrivent à partir desdites sources lumineuses sortant sur le devant à travers différents groupes de sortie (17, 18).

4. Module selon la revendication 3, **caractérisé en ce que** les deux différents groupes de sortie du couvercle annulaire antérieur sont disposés en répartitions annulaires et concentriques.

5. Module selon la revendication 1, **caractérisé en ce que** les sources lumineuses sont composées de diodes électroluminescentes (DEL) et **en ce que** les guides de lumière sont composés de fibres optiques.

6. Module selon la revendication 4, **caractérisé en ce que** les fibres optiques (10) sont montées entre des anneaux d'extrémité (11) qui sont fixés aux couvercles annulaires antérieur (12) et postérieur (13) pour définir une cage cylindrique avec une courbe de génération convexe.

7. Module selon la revendication 1, **caractérisé en ce que** les couvercles annulaires antérieur (12) et postérieur (13) et le boîtier (1) supportant les composants optiques forment un assemblage qui est monté sur la plateforme de rotation (2) à travers un support qui comprend au moins un segment arqué inférieur (20), avec une forme arquée circulaire, qui s'étend sous ledit boîtier (1) dans un sens parallèle à son axe, et qui est pourvu d'une denture (23) qui met en prise une roue d'engrenage d'un arbre de commande (25) monté sur ladite plateforme.

8. Module selon la revendication 7, **caractérisé en ce que** le segment inférieur (20) avec une forme arquée circulaire du support est traversé perpendiculairement par trois rouleaux montés sur la plateforme susmentionnée, deux d'entre eux (25) étant dentés et disposés sur le côté denté (23) dudit segment inférieur, se mettant en prise avec lui, et le troisième rouleau (24) possédant une surface lisse qui repose sur ledit segment inférieur sur le côté sans denture.

9. Module selon la revendication 7, **caractérisé en ce que** le support comprend deux segments arqués, un segment inférieur (20) et un segment supérieur (19) qui s'étendent respectivement au-dessus et au-dessous du boîtier (1) dans un sens longitudinal.

10. Module selon la revendication 7, **caractérisé en ce que** le couvercle annulaire pour l'éclairage arrière (13) comprend un système annulaire de DEL (16) qui est monté sur l'arrière du boîtier (1), à partir duquel système s'étend l'ensemble de fibres optiques (10) qui atteint le couvercle annulaire antérieur (12), qui est pourvu d'orifices à travers lesquels l'extrémité des fibres optiques est visible.
